# EUROPÄISCHE PATENTSCHRIFT

(11) **EP 0 788 867 B1**
(45) Veröffentlichungstag und Bekanntmachung des Hinweises auf die Patenterteilung: **07.07.1999**
(21) Anmeldenummer: 97100982.4
(22) Anmeldetag: 22.01.1997
(51) Int. Cl.: B29B 7/48

(54) **Vorrichtung zum kontinuierlichen Bearbeiten von fliessfähigen Materialien**
Apparatus for continuous processing of flowable materials
Dispositif de traitement continue des matières liquides

(30) Priorität: 06.02.1996 DE 19604228; 05.06.1996 DE 19622582
(43) Veröffentlichungstag der Anmeldung: 13.08.1997
(73) Patentinhaber: Blach, Josef A., D-71732 Tamm (DE)
(72) Erfinder: Blach, Josef A., D-71732 Tamm (DE)
(74) Vertreter: Haft, von Puttkamer, Berngruber, Czybulka

(56) Entgegenhaltungen:
- EP-A- 0 635 343
- FR-A- 1 596 363
- US-A- 1 356 296

## Beschreibung

Die Erfindung bezieht sich auf eine Vorrichtung zum kontinuierlichen Bearbeiten von riesel- bzw. fließfähigen Materialien nach dem Oberbegriff des Anspruchs 1.

Eine derartige Vorrichtung ist bekannt (US-PS 1,356,296). Die Bearbeitungselemente werden dabei durch Schnecken gebildet und die Materialzufuhr erfolgt über eine Öffnung in dem Gehäuse. Die die Schnecken tragenden Wellen bilden einen Kranz. Durch die Vielzahl der Wellen besitzt eine solche Vorrichtung eine wesentlich größere Volumendurchsatzleistung als z.B. eine Doppelschnecke. Wenn die Schnecken als dichtkämmendes Abstreifprofil ausgeführt sind, wird mit einer solchen Vorrichtung ein enges Verweilzeit-Spektrum gewährleistet und ein hoher Selbstreinigungseffekt erzielt. Die dicht ineinander greifenden Schnecken verhindern jedoch einen Materialdurchtritt durch den Kranz, jedenfalls bei festen oder hochviskosen Materialien. Wenn solche Materialien zugeführt werden, wird bei der bekannten Vorrichtung daher nur der äußere Bereich des Ringraums gefüllt, während der innere Bereich des Ringraums leer ist oder zumindest einen wesentlich geringeren Füllgrad aufweist. Dadurch werden die Wellen nach innen gebogen, mit der Folge, daß die Schnecken gegen den Kern gedrückt werden und damit einem hohen Verschleiß unterliegen. Zudem ergeben sich enge unkontrollierte Spalten zwischen den einzelnen Bearbeitungselementen, so daß es zu einer örtlichen Überbeanspruchung oder gar gegenseitigem Anlaufen kommen kann.

Aufgabe der Erfindung ist es, eine Vorrichtung der im Oberbegriff des Anspruchs 1 angegebenen Art so auszubilden, daß damit auch feste oder hochviskose Materialien bearbeitet werden können.

Dies wird erfindungsgemäß durch die im Anspruch 1 gekennzeichnete Vorrichtung erreicht. In den Unteransprüchen sind vorteilhafte Ausgestaltungen der erfindungsgemäßen Vorrichtung wiedergeben.

Bei der erfindungsgemäßen Vorrichtung sind mehrere, d.h. mindestens drei achsparallele, rotierbare Wellen in einem im Querschnitt kreisbogenförmigen Raum in einem Gehäuse angeordnet, welche jeweils eine Anzahl axial hintereinander angeordneter, positiv fördernder Bearbeitungselemente tragen, mit denen benachbarte Wellen dicht kämmend ineinandergreifen. Zwischen wenigstens zwei dieser Wellen ist der Zentriwinkelabstand größer als der Zentriwinkelabstand der ineinander greifenden Wellen. Der kreisbogenförmige Raum weist eine Bogenlänge auf, die der Bogenlänge des Kreisbogens entspricht, den die die Bearbeitungselemente tragenden Wellen bilden. An seinen beiden Enden wird der kreisbogenförmige Raum durch konkave Kreissegmente abgeschlossen, die die beiden Wellen mit ihren Bearbeitungselementen aufnehmen, die mit dem größeren Zentriwinkelabstand voneinander angeordnet sind.

An einer Seite des Gehäuses und zwar vorzugsweise an derjenigen, an der der größere Zentriwinkelabstand vorliegt, ist die Materialzufuhröffnung zu dem kreisbogenförmigen Raum vorgesehen, in dem die die Bearbeitungselemente tragenden Wellen angeordnet sind.

Damit verteilt sich die Menge des Materials und damit der Druck gleichmäßig in dem kreisbogenförmigen Raum mit den die Bearbeitungselemente tragenden Wellen, selbst wenn die Materialzufuhr durch die Materialzufuhröffnung drucklos erfolgt.

Eine radiale Belastung, die zu einem Durchbiegen der Wellen führt, ist dadurch weitgehend verhindert. Demgemäß können bei der erfindungsgemäßen Vorrichtung die Wellen lang und mit einer entsprechend großen Anzahl von Bearbeitungselementen versehen sein.

Durch die Erfindung wird damit eine relativ einfach aufgebaute Vorrichtung zur Verfügung gestellt, mit der auch pulverförmige oder granulierte Materalien sowie zähflüssige, insbesondere zähflüssige reaktive Materalien kontinuierlich bearbeitet, also beispielsweise gemischt, geschmolzen, homogenisiert, geknetet oder be- oder entgast werden können.

Je mehr Wellen in dem kreisbogenförmigen Raum vorgesehen sind, umso größer ist die Volumendurchsatzleistung. Zugleich ist der Selbstreinigungseffekt umso höher, je mehr Wellen vorhanden sind, da der Anteil der durch zwei benachbarte Wellen gereinigten Wellen gegenüber den Wellen am Ende des Kreisbogens, die nur durch eine benachbarte Welle gereinigt werden, entsprechend ansteigt. Aus dem gleichen Grunde wird auch das Druckaufbauvermögen größer und das Verweilzeitspektrum umso enger, je größer die Zahl der Wellen in dem kreisbogenförmigen Raum ist. Ein enges Verweilzeitspektrum ist insbesondere bei reaktiver Verfahrensführung von wesentlicher Bedeutung.

Zugleich läßt sich mit der erfindungsgemäßen Vorrichtung bei vergleichbarer Drehzahl und Schnecken-Ganghöhe der Durchsatz über einen weiten Bereich durch eine unterschiedliche Anzahl von Wellen variieren.

Nachstehend sind mehrere Ausführungsformen der erfindungsgemäßen Vorrichtung anhand der Zeichnung näher erläutert.

Darin zeigen:
Fig. 1 einen Längsschnitt durch eine erste Ausführungsform der Vorrichtung entlang der Linie I-I in Figuren 2 bis 5;
Fig. 2 bis 5 jeweils einen Schnitt entlang der Linien II-II, III-III, IV-IV bzw. V-V in Figur 1;
Fig. 6 einen Längsschnitt durch eine zweite Ausführungsform der Vorrichtung mit Antriebsteil;
Fig. 7 und 8 einen Schnitt entlang den Linie VII-VII bzw. VIII-VIII in Figur 6;
Fig. 9 einen Längsschnitt durch eine dritte Ausführungsform der Vorrichtung mit Antriebsteil;
Fig. 10 bis 12 jeweils einen Schnitt entlang der Linien X-X, XI-XI bzw. XII-XII in Figur 9;
Fig. 13 einen Längsschnitt durch eine vierte Ausführungsform;
Fig. 14 und 15 einen Schnitt entlang der Linien XIV-XIV bzw. XV-XV in Fig. 13;
Fig. 16 einen Längsschnitt durch das Antriebsteil einer fünften Ausführungsform der Vorrichtung;
Fig. 17 und 18 einen Schnitt entlang der Linien XVII-XVII bzw. XVIII-XVIII in Fig. 16;
Fig. 19 einen Längsschnitt durch eine sechste Ausführungsform der Vorrichtung;
Fig. 20 einen Schnitt entlang der Linie XX-XX in Fig. 19;
Fig. 21 einen Längsschnitt durch eine siebte Ausführungsform der Vorrichtung; und
Fig. 22 bis 25 einen Schnitt entlang der Linien XXII-XXII, XXIII-XXIII, XXIV-XXIV und XXV-XXV in Fig. 21.

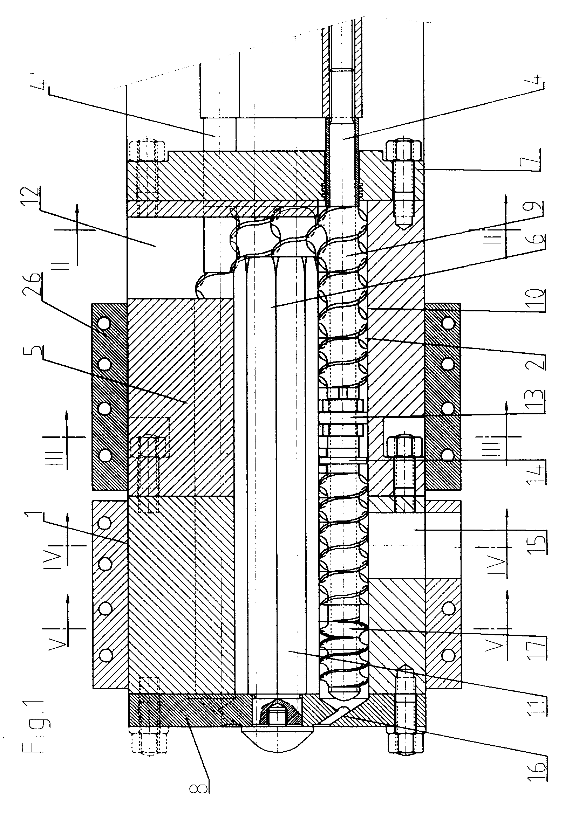

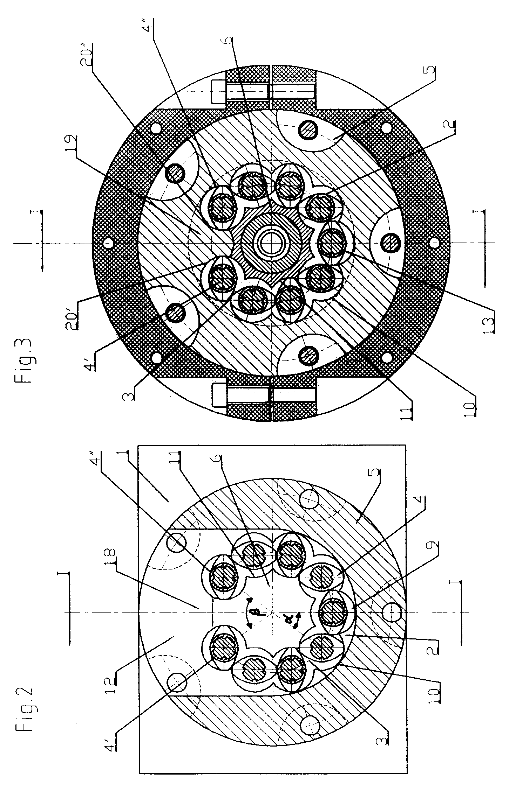

Gemäß Figur 1 bis 5 weist die Vorrichtung in einem Gehäuse 1 einen Raum 2 auf, der sich längs des Kreises 3 erstreckt. In dem Raum 2 ist eine Vielzahl achsparallel angeordneter Wellen 4, 4', 4'' angeordnet. Der Raum 2 erstreckt sich zwischen der Innenseite der Gehäusewand 5 und einem axialen Innenkern 6.

An den Stirnseiten ist das Gehäuse 1 mit Endplatten 7, 8 verschlossen. Die sich durch die Platte 7 erstreckenden Wellen 4, 4', 4'' werden von einem in Fig. 1 nicht dargestellten Getriebe gleichsinnig angetrieben.

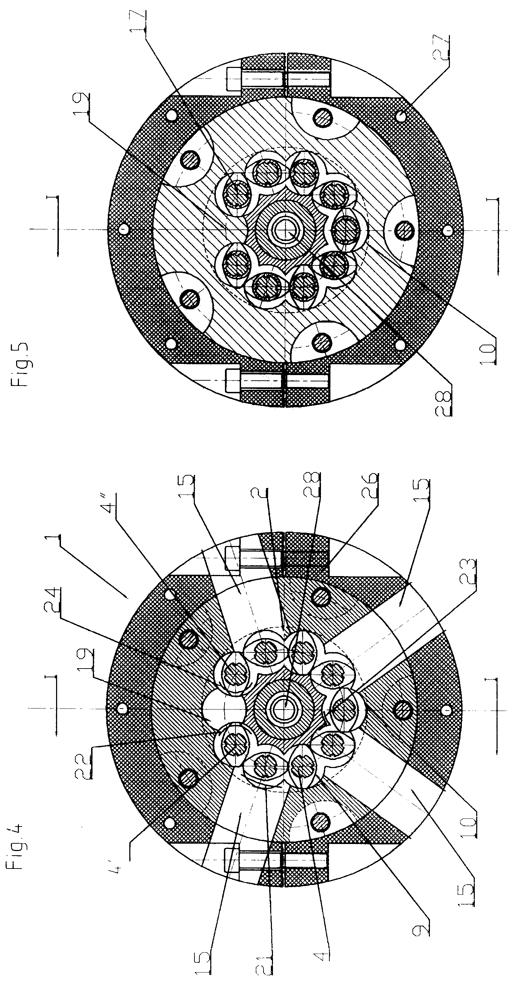

An jeder Welle 4, 4', 4'' ist drehfest eine Vielzahl von positiv fördernden Bearbeitungselementen 9 angeordnet, die als Schneckenelemente ausgebildet sind. Wie beispielsweise Fig. 2 und 4 zu entnehmen, greifen die Schneckenelemente 9 benachbarter Wellen 4, 4', 4'' kämmend mit geringem Spiel, also weitgehend dicht, ineinander.

Die Gehäusewand 5 ist an der Innenseite und der Kern 6 an seiner Außenseite mit achsparallelen, konkaven Kreissegmenten 10 bzw. 11 versehen. Im Querschnitt sind die Innenseite der Gehäusewand 5 und der Kern 6 damit rosettenförmig aus konzentrischen Kreissegmenten 10 und 11 gebildet, deren Kreismittelpunkt in der Zylinderfläche des Kreises 3 liegt. In die Kreissegmente 10 und 11 in der Gehäusewand 5 bzw. im Kern 6 greifen die Bearbeitungselmente 9 mit geringem Spiel, also weitgehend dicht ein.

An dem einen, der Endplatte 7 zugewandten Ende weist das Gehäuse 1 an der Oberseite eine Öffnung 12 auf, durch die das (nicht dargestellte) zu bearbeitende Material dem im Querschnitt kreisbogenförmigen Raum 2 zugeführt wird. Die Seitenflächen der Öffnung 12 verlaufen tangential zum kreisbogenförmigen Raum 2, so daß, wie aus Fig. 2 ersichtlich, die Öffnung 12 mit dem Raum 2 im Querschnitt einen U-förmigen Raum bildet.

Die Schneckenelemente 9 auf den Wellen 4, 4', 4'' erstrecken sich von der Materialzufuhröffnung 12 in den geschlossenen, kreisbogenförmigen Raum 2 materialaustrittsseitig zu den Knetblöcken 13, die aus drei oder mehr in Umfangsrichtung gegeneinander im Winkel versetzten Kurvenscheiben bestehen, deren Umriß jeweils aus mehreren Kreisbögen gebildet ist. Derartige Knetblöcke sind beispielsweise aus DE-B-813 154 und EP 0 422 272 A1 bekannt. Damit eine möglichst große Materialmenge durch die Spalte zwischen den Knetblöcken 13 benachbarter Wellen 4 hindurchgepreßt wird, sind den Knetblöcken 13 auf den Wellen 4 materialaustrittsseitig stauerzeugende Bearbeitungselemente auf jeder Welle 4 nachgeordnet, beispielsweise Stauscheiben 14.

Wenn das zu bearbeitende Material ein festes thermoplastisches Material ist, beispielsweise ein Kunststoffgranulat, kann im Bereich der Knetblöcke 13 eine Plastifizierung erfolgen.

Um flüchtige Bestandteile abführen zu können, sind materialaustrittsseitig von den Knetblöcken 13 bzw. den Stauscheiben 14 im Gehäuse 1 Gasaustrittsöffnungen 15 vorgesehen. Im Bereich der Gehäuseöffnungen 15 weisen die Wellen 4 dazu wiederum positiv fördernde Bearbeitungselemente 9, also beispielsweise Schneckenelemente, auf, mit denen benachbarte Wellen 4 kämmend mit geringem Spiel ineinandergreifen. Desgleichen erstrecken sich die konkaven Kreissegmente 10 und 11 an der Innenseite der Gehäusewand 5 und am Kern 6 über die gesamte Länge des kreisbogenförmigen Raumes 2.

Die aus dem plastifizierten Material austretenden Gase strömen durch die dünnen Spalte zwischen den Schnecken 9 benachbarter Wellen 4 in den äußeren Bereich des kreisbogenförmigen Raumes 2, von wo sie über die Öffnungen 15 nach außen gelangen.

Der Materialaustrag erfolgt über Kanäle 16, die sich von dem kreisbogenförmigen Raum 2 von jeder Welle 4 durch die Endplatte 8 nach außen erstrecken, an der beispielsweise ein nicht dargestellter Spritzkopf befestigt sein kann, in den die Kanäle 16 münden.

Zur Materialverdichtung des plastifizierten Materials vor Eintritt in die Kanäle 16 sind materialabfuhrseitig von den Entgasungsöffnungen 15 stauerzeugende Bearbeitungselemente vorgesehen, beispielsweise kurze Schneckenelemente 17 mit entgegengesetzter Steigung.

Gemäß Fig. 2 ist eine Öffnung 18 zwischen den beiden obersten Wellen 4' und 4'' an der Mündung der Materialzufuhröffnung 12 vorgesehen. Es ist also im Bereich 18 sozusagen eine Welle weggelassen. Demgemäß ist in dem Raum 2 von der Materialzufuhröffnung 12 bis zum materialabfuhrseitigen Ende der Vorrichtung, also bis zur Endplatte 8 anstelle einer Welle ein Füllstück 19 vorgesehen, das einen den Bearbeitungselementen 9, 14 und 17 entsprechenden Durchmesser aufweist. Der kreisbogenförmige Raum 2 wird an seinen beiden Enden durch konkave Kreissegmente 20', 20'' in dem Füllstück 19 abgeschlossen, die die beiden Wellen 4', 4'' mit ihren Bearbeitungselementen 9, 14, 17 aufnehmen, die in die Kreissegmente 20, 20'' weitgehend dicht eingreifen.

Das heißt, zur Bildung der Öffnung 18 ist dort das Füllstück 19 weggelassen und der Zentriwinkelabstand β zwischen den beiden Wellen 4' und 4'' ist größer als der Zentriwinkelabstand α der ineinandergreifenden Wellen 4, 4', 4'', und zwar ist der Zentriwinkelabstand β bei dieser Ausführungsform doppelt so groß wie der Zentriwinkelabstand α.

Gemäß Fig. 4 wird das zu bearbeitende Material entsprechend dem Pfeil 21 an der Außenseite des Raumes 2 an den Wellen 4 entlang, dann zwischen der Welle 4' und dem Füllstück 19 entsprechend dem Pfeil 22 zur Innenseite des Raumes 2 und dann entsprechend dem Pfeil 23 bis zur Welle 4'' und schließlich entsprechend dem Pfeil 24 zwischen der Welle 4'' und dem Füllstück 19 wieder zur Außenseite des Raumes 2 befördert.

Das Gehäuse 1 ist kühl- und heizbar ausgebildet. Dazu ist das Gehäuse 1 mit einem Mantel 26 umgeben, in dem eine Spirale 27 verläuft, die von einer Kühl- oder Heizflüssigkeit durchströmt wird. Ferner erstreckt sich durch den Kern 6 ein axialer Kanal 28, durch den die Kühl- bzw. Heizflüssigkeit strömt.

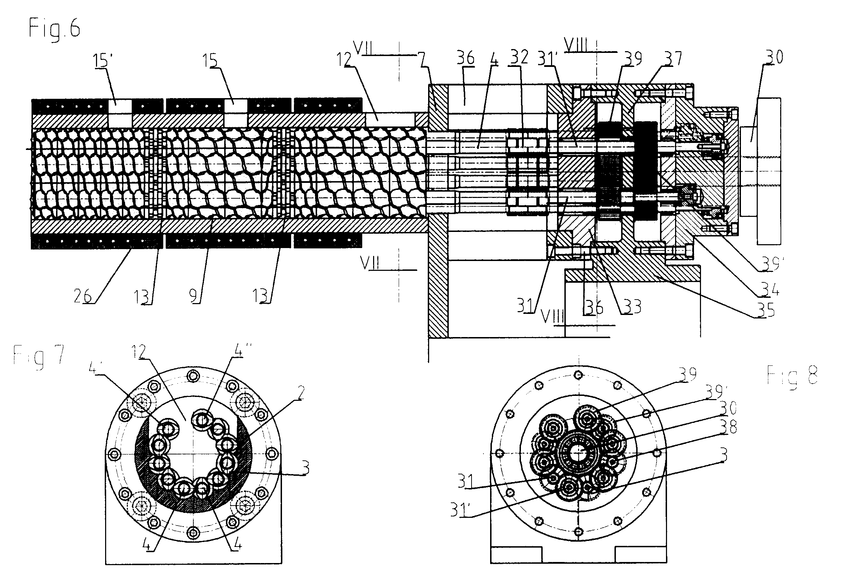

Bei der Ausführungsform nach Fig. 6 bis 8 sind gegenüber der Ausführungsform nach Fig. 1 bis 5 statt neun Wellen 4, 4', 4'' elf Wellen 4, 4', 4'' vorgesehen. Der Zentriwinkelabstand β zwischen den Wellen 4', 4'' an der Öffnung 12 ist jedoch ebenfalls zweimal so groß wie der Zentriwinkelabstand α zwischen den Wellen 4, 4', 4'' untereinander.

Ferner sind bei der Ausführungsform nach Fig. 6 bis 8 auf den Wellen 4, 4', 4'' mit axialem Abstand an zwei Abschnitten Knetblöcke 13, 13' zwischen Schneckenelementen 9 vorgesehen, sowie materialaustrittsseitig von jedem Knetblock-Abschnitt 13, 13' Gasaustrittsöffnungen 15, 15'.

Zum Antrieb der Wellen 4, 4', 4'' ist ein Getriebe mit einer Antriebswelle 30 und mit je einer Abtriebswelle 31, 31' für jede Welle 4, 4', 4'' vorgesehen. Die elf Abtriebswellen 31, 31' sind jeweils über eine starre Kupplung 32 mit den elf Wellen 4, 4', 4'' verbunden, die die Bearbeitungselemente 9, 13, 13' tragen.

Die Antriebswelle 30 und die Abtriebswellen 31, 31' sind in den Gehäusedeckeln 33, 34 sowie ggf. in der Zwischenwand 37 des Gehäusekörpers 35 gelagert. Der Gehäusedeckel 33 ist mit der Endplatte 7 durch Zuganker 36 verbunden.

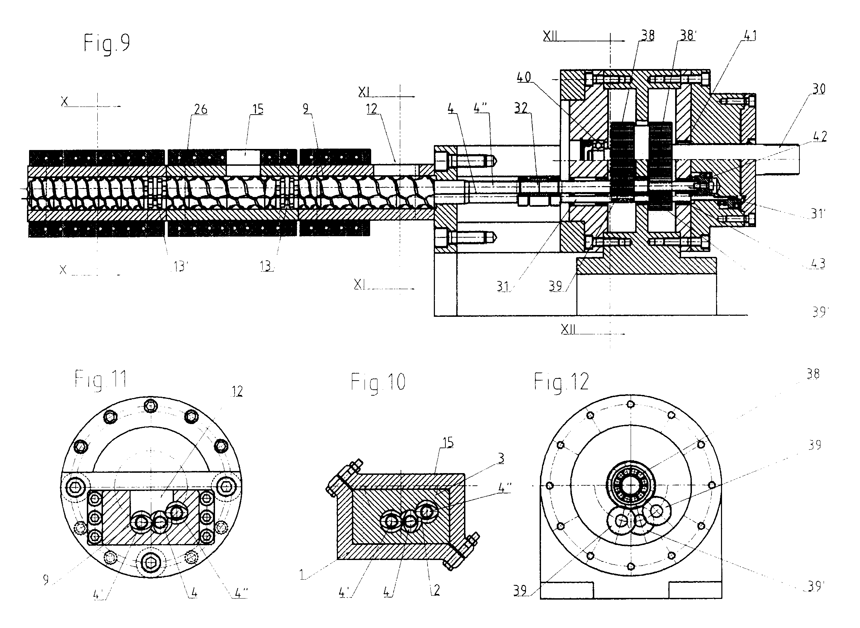

Die Antriebswelle 30 ist mit den Abtriebswellen 31, 31' formschlüssig gekoppelt. Dazu sind auf der Antriebswelle 30 zwei axial gegeneinander versetzte Antriebszahnräder 38, 38' (vgl. Fig. 9) beiderseits der Gehäusezwischenwand 37 drehfest angeordnet, die mit auf einem Kreisbogen um die Antriebswelle 30 auf den Abtriebswellen 31, 31' drehfest angeordneten Ritzeln 39, 39' kämmen, wobei die Ritzel 39, 39' benachbarter Abtriebswellen 31, 31' ihrerseits axial um den gleichen Abstand versetzt angeordnet sind wie die beiden Antriebszahnräder 38, 38', um mit dem einen Antriebszahnrad 38 bzw. dem anderen Antriebszahnrad 38' zu kämmen. Selbstverständlich kann außer der 11 treibenden Ritzel 39, 39' noch ein zwölftes Ritzel 39' vorgesehen sein, das leer läuft.

Bei der Ausführungsform nach Fig. 9 bis 12 ist das Gehäuse 1 rechteckig ausgebildet (Fig. 10 und 11). Es kann dazu massiv mit einem dem Raum 2 entsprechenden Längskanal ausgebildet sein, oder aus einem Unterteil bestehen, in welcher ein zylindersegmentförmiges Teil angeordnet ist, wobei in dem Unterteil und dem zylindersegmentförmigen Teil eine dem Raum 2 entsprechende Ausnehmung vorgesehen ist.

Die Ausführungsform nach Fig. 9 bis 12 mit drei Wellen 4, 4', 4'' weist gegenüber einem Doppelschneckenextruder bereits eine um 50 % höhere Volumendurchsatzleistung auf.

In Fig. 9 sind auch das Radial-Axial-Lager 40 und das Radiallager 41 zu sehen, mit denen die Antriebswelle 30 gelagert ist, ferner die Axiallager 42 und die Radiallager 43, mit denen die Abtriebswellen 31, 31' gelagert sind.

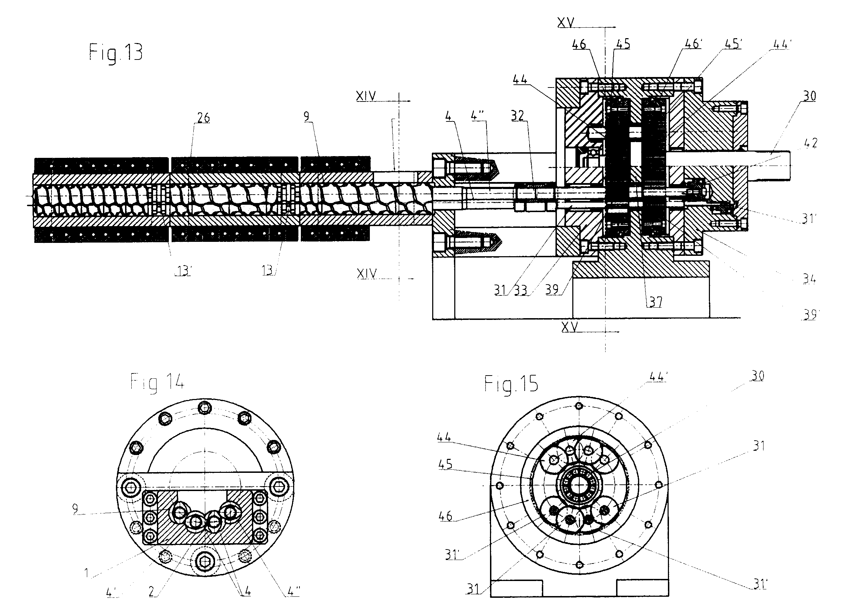

Bei der Ausführungsform nach Fig. 13 bis 15 sind vier Wellen 4, 4', 4'' mit ineinander greifenden Bearbeitungselementen 9 in dem kreisbogenförmigen Raum 2 im Gehäuse 1 vorgesehen.

Ferner ist die Antriebswelle 30 mit den Abtriebswellen 31, 31' nicht nur über die Antriebszahnräder 38, 38' und die Ritzel 39, 39' gekoppelt, sondern zusätzlich über Zwischenritzel 44, 44', die auf einem Kreisbogen um die Antriebswelle 30 angeordnet sind und einerseits in die Antriebszahnräder 38, 38' und andererseits zwei mit einer Innenverzahnung 45, 45' versehene Hohlräder 46, 46' eingreifen.

Die Hohlräder 46, 46' und die Zwischenritzel 44, 44' sind in gleicher Weise axial versetzt angeordnet wie die Antriebszahnräder 38, 38' und die Ritzel 39, 39' auf den Abtriebswellen 31, 31'. Die Zwischenritzel 44, 44' sind in den Gehäusedeckeln 33, 34 bzw. der Zwischenwand 37 drehbar gelagert.

Die Anzahl der Zwischenritzel 44, 44' und ihre Zähnezahl entspricht der Zähnezahl und der Anzahl der Ritzel 39, 39' auf den Abtriebswellen 31, 31'. Auch sind die Zwischenritzel 44, 44' mit dem gleichen Zentriwinkelabstand α angeordnet wie die Abtriebswellen 31, 31'. Dabei ist jedem Ritzel 39, 39' jeweils diametral gegenüber, also um einen Zentriwinkelabstand von 180° versetzt, ein Zwischenritzel 44, 44' zugeordnet.

Durch die zusätzliche Kopplung der Antriebswelle 30 über die Zwischenritzel 44, 44' sowie die mit einer Innenverzahnung 45, 45' versehene Hohlräder 46, 46' wird die doppelte Antriebsleistung in die Wellen 4, 4', 4'' eingeleitet. Das Drehmoment wird dabei biegelastfrei von den Antriebszahnräder 38, 38' auf die Abtriebswellen 31, 31' übertragen. Durch die ausgeglichenen Kräfte entfällt eine hohe Belastung der Lager, so daß relativ kleine Lager eingebaut werden können.

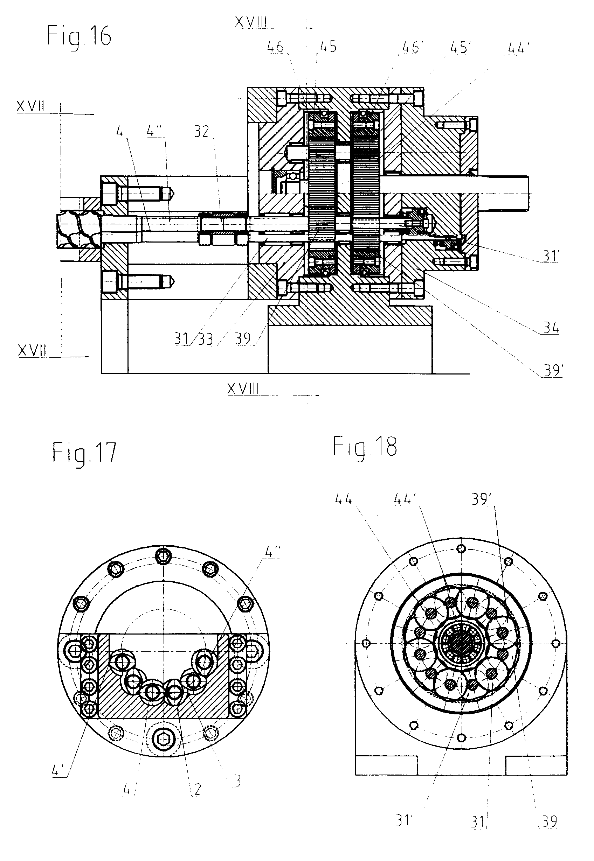

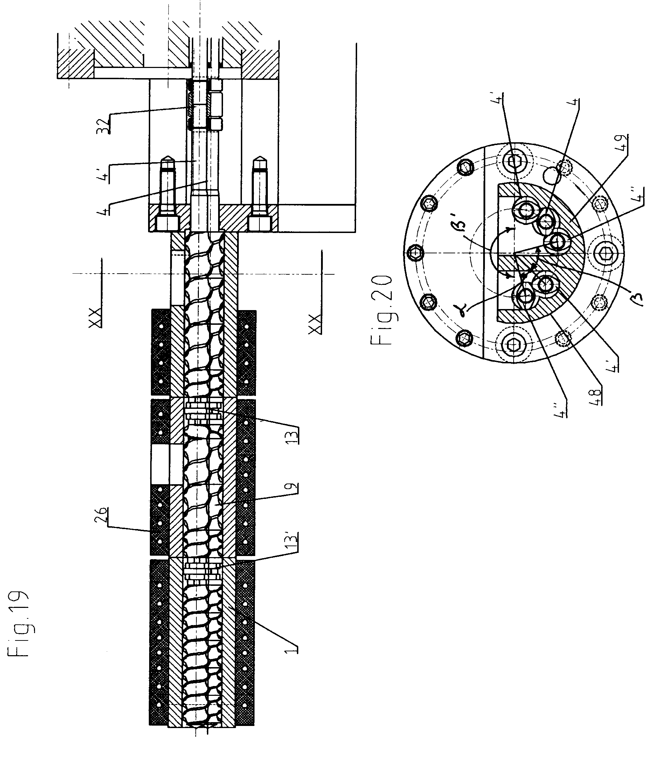

Bei der Ausführungsform nach Fig. 16 bis 18 sind die sechs Wellen 4, 4', 4'' längs eines Halbkreises 3 in dem Raum 2 in dem Gehäuse 1 angeordnet. Den sechs Ritzeln 39, 39' der Abtriebswellen 31, 31' sind sechs Zwischenritzel 44, 44' zugeordnet, die gleichfalls längs eines Halbkreises liegen, so daß sich gemäß Fig. 19 ein geschlossener Kranz aus Ritzeln 39, 39' und Zwischenritzeln 44, 44' ergibt. Das heißt, das Ritzel 39' und das Zwischenritzel 44, die einander benachbart sind, weisen den gleichen Zentriwinkelabstand α auf wie die Ritzel 39, 39' und die Zwischenritzel 44, 44' untereinander.

Bei der in Fig. 16 bis 18 dargestellten Ausführungsform, bei der die Zwischenritzel 44, 44' mit den Ritzeln 39, 39' auf den Abtriebswellen 31, 31' einen geschlossenen Kranz bilden, wird eine maximale Antriebsleistung und damit ein maximaler Volumendurchsatz erreicht.

Bei der Ausführungsform nach Fig. 19 und 20 sind zwei Gruppen 48, 49 von Wellen 4, 4', 4'' jeweils auf einem Kreisbogen 3 in jeweils einem Raum 2, 2' im Gehäuse 1 vorgesehen, wobei die Bearbeitungselemente 9 jeder Gruppe 48, 49 ineinandergreifen. Das heißt, der Zentriwinkelabstand β, β' der einander benachbarten Wellen 4 und 4'' der beiden Gruppen 48, 49 ist größer als der Zentriwinkelabstand α der ineinandergreifenden Wellen 4, 4', 4''.

Mit der Ausführungsform nach Fig. 19 und 20 können mit der gleichen Vorrichtung zwei verschiedene Produkte parallel bearbeitet werden. Sie kann daher beispielsweise zum Koextrudieren zweier verschiedener Massen verwendet werden, oder zum getrennten Mischen zweier Massen, die dann zusammengeführt werden.

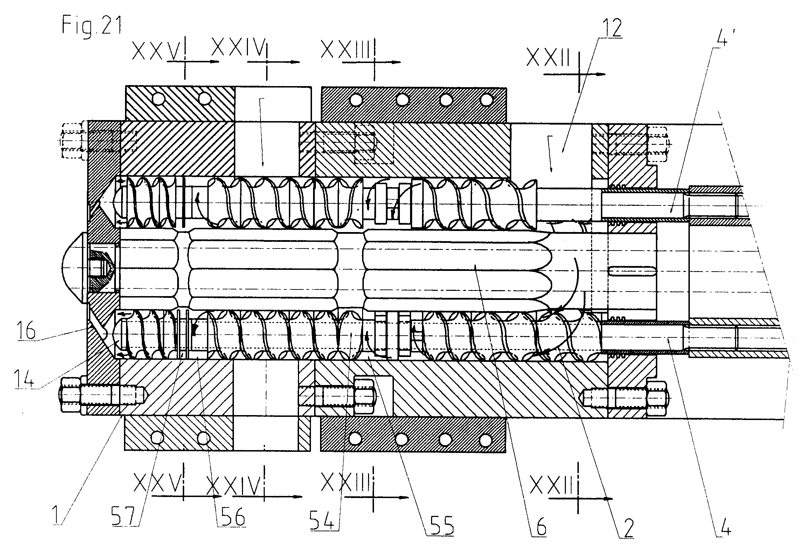

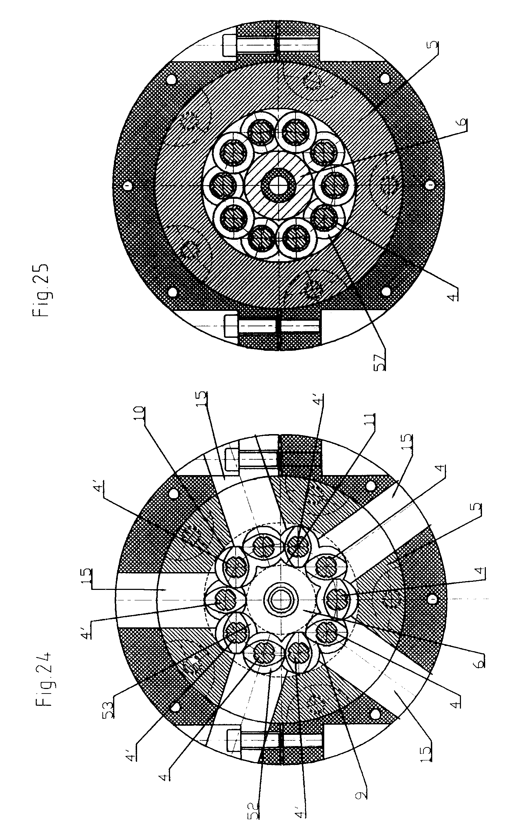

Die Ausführungsform nach Fig. 21 bis 25 unterscheidet sich von den vorstehenden Ausführungsformen insbesondere dadurch, daß die Öffnungen 18 in dem Kranz 3 durch Wellen 4' gebildet werden, an denen jeweils im Bereich der Materialzufuhröffnung 12 ein Schneckenelement 9 weggelassen ist.

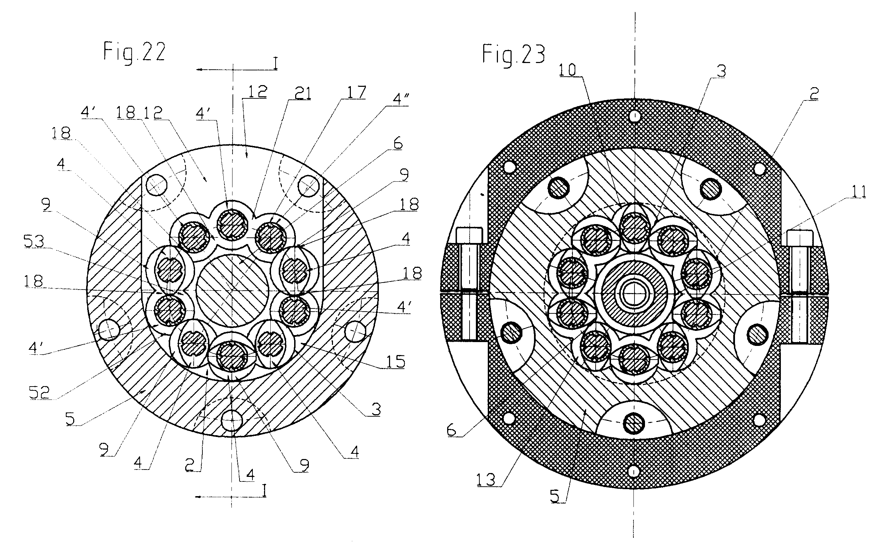

Wie aus Figur 22 ersichtlich, ist dies bei den drei der Öffnung 12 zugewandten Wellen 4*'* der Fall, ferner bei den beiden seitlichen Wellen 4*'*, die an Stellen angeordnet sind, an denen der Ringraum 2 sich zu der Öffnung 12 zu erweitern beginnt.

Die Wellen 4, die auch im Bereich der Öffnung 12 vollständig mit Schneckenelementen 9 bestückt sind, sind damit die drei der Öffnung 12 gegenüberliegenden, also unten liegenden Wellen 4 sowie die beiden Wellen 4, die seitlich am unteren Ende der Öffnung 12 angeordnet sind.

Durch das Fehlen der Schneckenelemente 9 an den Wellen 4*'* im Bereich der Materialzufuhröffnung 12 entstehen in dem Kranz bzw. der dichten Teilkreis-Zylinderfläche 3 radiale Öffnungen 18, über die der radial äußere Bereich 52 des Ringraumes 2 und der radial innere Bereich 53 miteinander verbunden sind (Figur 22). Durch die Öffnungen 18 im Kranz 3 kann damit das zu bearbeitende Material auch in den inneren Bereich 53 gelangen, wodurch sich die Materialmenge gleichmäßig auf den äußeren und den inneren Bereich 52 bzw. 53 verteilt, so daß in beiden Bereichen 52 und 53 der gleiche Druck herrscht. Dies gilt für feste fließfähige Materialien, wie pulverförmige Materialien ebenso wie für flüssige Materialien oder Granulat, sofern dessen Teilchengröße die Größe der Öffnungen 18 nicht überschreitet.

Auf die Wellen 4, 4*'* wird damit kein radialer Druck ausgeübt. Sie können daher lang ausgebildet und mit einer entsprechend großen Zahl von Bearbeitungselementen 9 versehen werden.

Die Schneckenelemente 9 auf den Wellen 4, 4*'* erstrecken sich von der Materialzufuhr 12 in den geschlossenen Ringraum 2, materialaustrittsseitig zu den Knetblöcken 13. Damit eine möglichst große Materialmenge durch die Spalte zwischen den Knetblöcken 13 benachbarter Wellen 4, 4*'* hindurch gepreßt wird, sind den Knetblöcken 13 auf den Wellen 4, 4*'* materialaustrittsseitig stauerzeugende Bearbeitungselemente nachgeordnet, beispielsweise ein kurzes Schneckenelement 54 auf jeder Welle 4, 4*'* mit einer den Schneckenelementen 9 entgegengesetzten Steigung. Die Schneckenelemente 54 fördern das Material zu den Knetblöcken 13 zurück, so daß es im Bereich der Knetblöcke 13 zu einer Materialverdichtung kommt.

Zwischen den Knetblöcken 13 und den stauerzeugenden Bearbeitungselementen 54 weisen die Wellen 4, 4*'* beispielsweise durch Distanzringe 55 einen reduzierten Durchmesser auf. Dadurch entstehen zusätzlich radiale Öffnungen im Bereich der Teilkreiszylinderfläche 3, die den Stoffaustausch zwischen den Bereichen 52 und 53 erlauben. Ferner sind in dem Bereich 55 der Wellen 4, 4*'* mit reduziertem Durchmesser am Innenkern 6 die konkaven Kreissegmente 11 durch Abdrehen beseitigt.

Das plastifizierte Material wird durch Druck und die gute Abdichtung im Außenbereich 52 und die freien axialen Durchtrittsmöglichkeiten des Produktes im inneren Bereich 53 des Rückförderelementes 54 entsprechend dem Pfeil 56 aus dem Bereich zwischen den Knetblöcken 13 und den stauerzeugenden Bearbeitungselementen 54 über den Bereich 55 der Wellen 4, 4*'* mit reduziertem Durchmesser in den radial inneren Bereich 53 des Ringraumes 2 gepreßt. Der äußere Bereich 52 ist nachfolgend nur mit diesen Materialschichten befrachtet, so daß frei von Materialaustritt durch die Gehäuseöffnungen 15 große Mengen flüchtiger Bestandteile abgeführt werden können.

Dazu sind auf den Wellen 4, 4*'* wiederum eine oder mehrere positiv fördernde Bearbeitungselemente 9, also beispielsweise Schneckenelemente, vorgesehen, mit denen benachbarte Wellen 4, 4*'* kämmend mit geringem Spiel ineinander greifen, wobei in dem Entgasungsabschnitt mit den Gasaustrittsöffnungen 15 der Innenkern 6 und die Innenseite der Gehäuseumfangswand 5 gleichfalls mit achsparallelen, konkaven Kreissegmenten 11 bzw. 10 versehen sind, in die das bzw. die Schneckenelemente 9 der jeweiligen Welle 4, 4*'* mit geringem Spiel eingreifen.

Die aus dem plastifiziertem Material in dem Entgasungsabschnitt austretenden Gase strömen durch die dünnen Spalte zwischen den Schnecken 9 benachbarter Wellen 4, 4*'* in den äußeren Bereich 52 des Ringraumes 2 zu den Gasaustrittsöffnungen 15.

Um die Entgasung zu beschleunigen, kann an die Öffnungen 15 ein Vakuum angelegt werden. Die Öffnungen 15 können um den Umfang der Gehäuseinnenwand 5 herum sternförmig angeordnet sein.

Der Materialaustrag erfolgt über Kanäle 16. Zur Materialverdichtung des plastifizierten Materials vor Eintritt in die Kanäle 16 sind stauerzeugende Bearbeitungselemente, z. B. in Form von Stauscheiben 57 auf den Wellen 4, 4*'* materialabfuhrseitig von dem Entgasungsabschnitt vorgesehen. Die Stauscheiben 57 benachbarter Wellen 4, 4*'* greifen unter Bildung eines Labyrinths ineinander. Zwischen den Stauscheiben 57 und den Schneckenelementen 9 sind auf den Wellen 4, 4*'*, z. B. durch Distanzringe 58, kurze Axialbereiche mit reduziertem Durchmesser, vorgesehen. Ferner sind im Bereich der Stauscheiben 57 am Innenkern 6 die konkaven Kreissegmente 11 beseitigt. Zudem ist der Innenkern 6 und die Gehäuseinnenwand 5 im Bereich der Stauscheiben 57 etwas abgedreht, so daß das in diesem Bereich 59 verdichtete plastifizierte Material entsprechend den über die Stauscheiben 57 gleichmäßig verteilt in den äußeren Bereich 52 und den inneren Bereich 53 des Ringraumes 2 materialaustrittsseitig von den Stauscheiben 57 gelangt, an dem die Wellen 4, 4*'* an ihrem Endbereich mit positiv fördernden Bearbeitungselementen, also Schneckenelementen 9 versehen sind.

## Patentansprüche

1. Vorrichtung zum kontinuierlichen Bearbeiten von rieselfähigen und fließfähigen Materialien mit mehreren in einem Raum in einem Gehäuse längs eines Kreises mit gleichem Zentriwinkelabstand angeordneten achsparallelen, rotierbaren Wellen, von denen jede eine Anzahl axial hintereinander angeordneter Bearbeitungselemente trägt, mit denen benachbarte Wellen dicht kämmend ineinandergreifen, wobei das Gehäuse an der radial innen und außen liegenden Seite des Raumes mit achsparallelen konkaven Kreissegmenten versehen ist, die die jeweilige Welle mit ihren Bearbeitungselementen aufnehmen und führen, und wenigstens eine Materialzufuhröffnung in den Raum an einem Ende und wenigstens eine Materialaustrittsöffnung aus dem Raum am anderen Ende des Gehäuses vorgesehen sind, dadurch gekennzeichnet, daß längs des Kreises (3) wenigstens eine radiale Öffnung (18) zum Durchtritt des Materials von der radial außen zur radial innen liegenden Seite des Raumes (2) vorgesehen ist.

2. Vorrichtung nach Anspruch 1, dadurch gekennzeichnet, daß in dem Ringraum wenigstens eine Verdichtungszone vorgesehen ist und das wenigstens eine Bearbeitungselement (9) in dem Bereich von der Materialzufuhröffnung (12) bis zur Verdichtungszone weggelassen ist.

3. Vorrichtung nach Anspruch 2, dadurch gekennzeichnet, daß die Verdichtungszone durch Knetblöcke (13) gebildet wird.

4. Vorrichtung nach einem der vorstehenden Ansprüche, dadurch gekennzeichnet, daß zur Bildung der wenigstens einen radialen Öffnung (18) zwischen wenigstens zwei Wellen (4', 4'') der Zentriwinkelabstand (β) größer ist als der Zentriwinkelabstand (α) der ineinandergreifenden Wellen (4, 4', 4'') und der Raum (2) im Querschnitt kreisbogenförmig ausgebildet ist und an seinen beiden Enden durch konkave Kreissegmente (20', 20'') abgeschlossen ist, die die beiden Wellen (4', 4'') mit ihren Bearbeitungselementen (9) aufnehmen, die mit dem größeren Zentriwinkelabstand (β) voneinander angeordnet sind.

5. Vorrichtung nach Anspruch 4, dadurch gekennzeichnet, daß längs des Kreises (3) wenigstens zwei Gruppen (48, 49) ineinandergreifender Wellen (4, 4', 4'') vorgesehen sind, wobei der Zentriwinkelabstand (β, β') der einander benachbarten Wellen (4', 4'') der wenigstens zwei Gruppen (48, 49) größer ist als der Zentriwinkelabstand (α) der ineinandergreifenden Wellen (4, 4', 4'').

6. Vorrichtung nach einem der Ansprüche 1 bis 3, dadurch gekennzeichnet, daß zur Bildung der wenigstens einen radialen Öffnung (18) alle Wellen (4, 4') den gleichen Zentriwinkelabstand aufweisen, jedoch an wenigstens einer Welle (4') wenigstens ein Bearbeitungselement (9) weggelassen ist.

7. Vorrichtung nach einem der vorstehenden Ansprüche, dadurch gekennzeichnet, daß an dem Kern (6) im Bereich der Materialzufuhröffnung (12) zumindest über einen axialen Teilbereich die konkaven Kreissegmente (11) weggelassen sind.

8. Vorrichtung nach einem der Ansprüche 1 bis 7, dadurch gekennzeichnet, daß der Kern (6) im Bereich der Materialzufuhröffnung (12) zumindest über einen Axialbereich weggelassen ist.

9. Vorrichtung nach einem der vorstehenden Ansprüche, dadurch gekennzeichnet, daß die Bearbeitungselemente (9) Schneckenelemente sind.

10. Vorrichtung nach einem der vorstehenden Ansprüche, dadurch gekennzeichnet, daß ein Entgasungsabschnitt mit in den Ringraum (2) mündenden Entgasungsöffnungen (15) vorgesehen ist.

11. Vorrichtung nach Anspruch 2 und 10, dadurch gekennzeichnet, daß der Entgasungsabschnitt materialaustrittsseitig von der Verdichtungszone angeordnet ist.

12. Vorrichtung nach Anspruch 11, dadurch gekennzeichnet, daß der Entgasungsabschnitt materialzufuhrseitig zum Materialdurchtritt durch den Kreis (3) entweder (a) von außen nach innen oder (b) von innen nach außen ausgebildet ist und die Entgasungsöffnungen (15) im Fall (a) durch die Gehäuseumfangswand (5) und im Fall (b) über den Kern (6) in den Ringraum (2) münden.

13. Vorrichtung nach Anspruch 12, dadurch gekennzeichnet, daß zum Materialdurchtritt im Fall (a) die konkaven Kreissegmente (11) in dem Kern (6) und im Fall (b) die konkaven Kreissegmente (10) an der Gehäuseumfangswand (5) weggelassen sind.

14. Vorrichtung nach Anspruch 12 oder 13, dadurch gekennzeichnet, daß sie materialaustrittsseitig vom Entgasungsabschnitt zum Materialdurchtritt durch den Kreis (3) von außen nach innen und umgekehrt ausgebildet ist.

15. Vorrichtung nach Anspruch 14, dadurch gekennzeichnet, daß zum Materialdurchtritt sowohl die konkaven Kreissegmente (10) an der Gehäuseumfangswand (5) wie die konkaven Kreissegmente (11) an dem Kern (6) weggelassen sind.

16. Vorrichtung nach Anspruch 1, dadurch gekennzeichnet, daß die Materialaustrittsöffnungen durch Kanäle (16) gebildet sind, die sich vom Ringraum (2) von jeder Welle (4, 4*'*, 4'') durch die Stirnwand (8) des Gehäuses (1) nach außen erstrecken.

17. Vorrichtung nach einem der vorstehenden Ansprüche, dadurch gekennzeichnet, daß zum Antrieb der die Bearbeitungselemente tragenden Wellen (4, 4', 4'') ein Getriebe mit einer Antriebswelle (30) und mit den die Bearbeitungselemente tragenden Wellen (4, 4', 4'') drehfest verbundenen Abtriebswellen (31, 31') vorgesehen ist, wobei die Antriebswelle (30) und die Abtriebswellen (31, 31') durch auf diesen drehfest angeordneten Zahnrädern (38, 38'; 39, 39') formschlüssig miteinander gekoppelt sind.

18. Vorrichtung nach Anspruch 17, dadurch gekennzeichnet, daß die auf der Antriebswelle (30) und den Abtriebswellen (31, 31') angeordneten Zahnräder (38, 38'; 39, 39') zusätzlich über wenigstens ein Zwischenritzel (44, 44') und wenigstens ein mit einer Innenverzahnung (45, 45') versehenes Hohlrad (46, 46') miteinander gekoppelt sind.

19. Vorrichtung nach Anspruch 17, dadurch gekennzeichnet, daß auf der Antriebswelle (30) zwei axial gegeneinander versetzte Antriebszahnräder (38, 38') drehfest angeordnet sind und die Zahnräder auf den Abtriebswellen (31, 31') durch darauf drehfest angeordnete Ritzel (39, 39') gebildet sind, wobei die Ritzel (39, 39') benachbarter Abtriebswellen zum Eingriff in das eine bzw. andere der beiden Antriebszahnräder (38, 38') axial gegeneinander versetzt angeordnet sind.

20. Vorrichtung nach Anspruch 18 und 19, dadurch gekennzeichnet, daß die beiden Antriebszahnräder (38, 38') über wenigstens je ein Zwischenritzel (44, 44') und je ein mit einer Innenverzahnung (45, 45') versehenes Hohlrad (46, 46') mit den Ritzeln (39, 39') auf den Abtriebswellen (31, 31') gekoppelt sind.

21. Vorrichtung nach einem der Ansprüche 5 bis 7, dadurch gekennzeichnet, daß die Anzahl der Zwischenritzel (44, 44') der Anzahl der Ritzel (39, 39') auf den Abtriebswellen (31, 31') entspricht.

22. Vorrichtung nach Anspruch 21, dadurch gekennzeichnet, daß jedem Ritzel (39, 39') auf einer der Abtriebswellen (31, 31') diametral gegenüber ein Zwischenritzel (44, 44') angeordnet ist.

23. Vorrichtung nach einem der Ansprüche 18 bis 22, dadurch gekennzeichnet, daß die Abtriebswellen (31, 31') und die Zwischenritzel (44, 44') mit dem gleichen Zentriwinkelabstand (α) angeordnet sind.

24. Vorrichtung nach Anspruch 23, dadurch gekennzeichnet, daß die einander benachbarten Ritzel (39, 39') und Zwischenritzel (44, 44') den gleichen Zentriwinkelabstand aufweisen wie die einander benachbarten Ritzel (39, 39') und die einander benachbarten Zwischenritzel (44, 44') untereinander.

## Claims

1. An apparatus for continuous processing of pourable and flowable materials having a plurality of axis-parallel, rotatable shafts disposed at the same central angle distance along a circle in a space in a housing, each carrying a number of processing elements disposed axially one behind the other with which adjacent shafts closely mesh, the housing being provided on the radially inside and outside sides of the space with axis-parallel concave segments of a circle which receive and guide the particular shaft with its processing elements, and at least one material supply opening into the space is provided at one end of the housing and at least one material discharge opening out of the space at the other end of the housing, characterized in that at least one radial opening (18) is provided along the circle (3) for passage of the material from the radially outside to the radially inside sides of the space (2).

2. The apparatus of claim 1, characterized in that at least one compacting zone is provided in the annular space, and at least one processing element (9) is left out in the area from the material supply opening (12) to the compacting zone.

3. The apparatus of claim 2, characterized in that the compacting zone is formed by mixing blocks (13).

4. The apparatus of any of the above claims, characterized in that to form the at least one radial opening (18) the central angle distance (β) is greater between at least two shafts (4', 4'') than the central angle distance (α) between the meshing shafts (4, 4', 4'') and the space (2) is formed with a circular arc cross section and is closed at both ends by concave segments of a circle (20', 20'') which receive the two shafts (4', 4'') with their processing elements (9) which are disposed at the greater central angle distance (β) apart.

5. The apparatus of claim 4, characterized in that at least two groups (48, 49) of meshing shafts (4, 4', 4'') are provided along the circle (3), the central angle distance (β, β') between adjacent shafts (4', 4'') of the at least two groups (48, 49) being greater than the central angle distance (α) between the meshing shafts (4, 4', 4'').

6. The apparatus of any of claims 1 to 3, characterized in that to form the at least one radial opening (18) all shafts (4, 4') have the same central angle distance but at least one processing element (9) is left out on at least one shaft (4').

7. The apparatus of any of the above claims, characterized in that the concave segments (11) are left out on the core (6) in the area of the material supply opening (12) at least over a partial axial area.

8. The apparatus of any of claims 1 to 7, characterized in that the core (6) is left out in the area of the material supply opening (12) at least over an axial area.

9. The apparatus of any of the above claims, characterized in that the processing elements (9) are screw elements.

10. The apparatus of any of the above claims, characterized in that a degassing portion is provided having degassing openings (15) opening into the annular space (2).

11. The apparatus of claims 2 and 10, characterized in that the degassing portion is disposed on the material discharge side of the compacting zone.

12. The apparatus of claim 11, characterized in that the degassing portion is formed on the material supply side for the passage of material through the circle (3) either (a) from the outside to the inside or (b) from the inside to the outside, and the degassing openings (15) open into the annular space (2) through the peripheral housing wall (5) in case (a) and via the core (6) in case (b).

13. The apparatus of claim 12, characterized in that for the passage of material the concave segments (11) in the core (6) are left out in case (a) and the concave segments (10) on the peripheral housing wall (5) in case (b).

14. The apparatus of claim 12 or 13, characterized in that it is formed on the material discharge side of the degassing portion for the passage of material through the circle (3) from the outside to the inside, and vice versa.

15. The apparatus of claim 14, characterized in that for the passage of material both the concave segments (10) on the peripheral housing wall (5) and the concave segments (11) on the core (6) are left out.

16. The apparatus of claim 1, characterized in that the material discharge openings are formed by channels (16) which extend to the outside from the annular space (2) from each shaft (4, 4', 4'') through the end wall (8) of the housing (1).

17. The apparatus of any of the above claims, characterized in that for driving the shafts (4, 4', 4'') carrying the processing elements a gear is provided having a driving shaft (30) and driven shafts (31, 31') connected with the shafts (4, 4', 4'') carrying the processing elements so as to rotate therewith, the driving shaft (30) and the driven shafts (31, 31') being coupled positively with each other by toothed wheels (38, 38'; 39, 39') disposed thereon so as to rotate therewith.

18. The apparatus of claim 17, characterized in that the toothed wheels (38, 38'; 39, 39') disposed on the driving shaft (30) and the driven shafts (31, 31') are coupled with each other additionally via at least one intermediate pinion (44, 44') and at least one hollow wheel (46, 46') provided with an internal toothing (45, 45').

19. The apparatus of claim 17, characterized in that two driving toothed wheels (38, 38') mutually offset axially are disposed on the driving shaft (30) so as to rotate therewith, and the toothed wheels are formed on the driven shafts (31, 31') by pinions (39, 39') disposed thereon so as to rotate therewith, the pinions (39, 39') of adjacent driven shafts being mutually offset axially for engagement in one or the other driving toothed wheel (38, 38').

20. The apparatus of claims 18 and 19, characterized in that the two driving toothed wheels (38, 38') are coupled with the pinions (39, 39') on the driven shafts (31, 31') via at least one intermediate pinion (44, 44') and one hollow wheel (46, 46') provided with an internal toothing (45, 45') in each case.

21. The apparatus of any of claims 5 to 7, characterized in that the number of intermediate pinions (44, 44') corresponds to the number of pinions (39, 39') on the driven shafts (31, 31').

22. The apparatus of claim 21, characterized in that an intermediate pinion (44, 44') is disposed diametrically opposite each pinion (39, 39') on one of the driven shafts (31, 31').

23. The apparatus of any of claims 18 to 22, characterized in that the driven shafts (31, 31') and the intermediate pinions (44, 44') are disposed at the same central angle distance (α).

24. The apparatus of claim 23, characterized in that the adjacent pinions (39, 39') and intermediate pinions (44, 44') have the same central angle distance as the adjacent pinions (39, 39') and the adjacent intermediate pinions (44, 44') between each other.

## Revendications

1. Dispositif pour le traitement continu de matériaux fluents et coulants, comportant plusieurs arbres rotatifs, parallèles à l'axe, agencés dans une chambre située dans un boîtier le long d'un cercle, avec le même écartement par rapport à l'angle au centre, dont chaque arbre porte un nombre d'éléments de traitement agencés axialement les uns derrière les autres, avec lesquels des arbres voisins s'engrènent de manière serrée, le boîtier étant pourvu, sur les côtés radiaux intérieur et extérieur de la chambre, de segments de cercle concaves parallèles à l'axe, lesquels reçoivent et guident l'arbre respectif avec ses éléments de traitement, et au moins une ouverture d'amenée de matériau dans la chambre étant prévue à une extrémité du boîtier et au moins une ouverture de sortie de matériau hors de la chambre étant prévue à l'autre extrémité du boîtier, caractérisé en ce que le long du cercle (3) est prévue au moins une ouverture radiale (18) pour le passage du matériau depuis le côté radial extérieur jusqu'au côté radial intérieur de la chambre (2).

2. Dispositif selon la revendication 1, caractérisé en ce qu'il est prévu dans la chambre annulaire au moins une zone de tassement et en ce que ledit au moins un élément de traitement (9) est omis dans la région allant depuis l'ouverture d'amenée de matériau (12) jusqu'à la zone de tassement.

3. Dispositif selon la revendication 2, caractérisé en ce que la zone de tassement est formée par des blocs pétrisseurs (13).

4. Dispositif selon l'une quelconque des revendications précédentes, caractérisé en ce que pour former ladite au moins une ouverture (18) radiale entre au moins deux arbres (4', 4'') l'espacement par rapport à l'angle au centre (β) est supérieur à l'espacement par rapport à l'angle au centre (α) des arbres (4, 4', 4'') s'engrenant les uns dans les autres, et en ce que la chambre (2) est réalisée de section en arc de cercle et fermée à ses deux extrémités par des segments de cercle (20', 20'') concaves qui reçoivent les deux arbres (4', 4'') avec leurs éléments de traitement (9), lesquels sont agencés les uns par rapport aux autres avec l'espacement le plus grand par rapport à l'angle au centre (β).

5. Dispositif selon la revendication 4, caractérisé en ce que le long du cercle (3) sont prévus au moins deux groupes (48, 49) d'arbres (4, 4', 4'') s'égrenant les uns dans les autres, l'espacement par rapport à l'angle au centre (β, β') des arbres (4', 4'') voisins les uns des autres des au moins deux groupes (48, 49) étant supérieur a l'espacement par rapport à l'angle au centre (α) des arbres (4, 4', 4'') s'égrenant les uns dans les autres.

6. Dispositif selon l'une quelconque des revendications 1 à 3, caractérisé en ce que pour former ladite au moins une ouverture (18) radiale, tous les arbres (4, 4') présentent le même espacement par rapport à l'angle au centre, au moins un élément de traitement (9) étant toutefois omis sur au moins un arbre (4').

7. Dispositif selon l'une quelconque des revendications précédentes, caractérisé en ce que sur le noyau (6) dans la région de l'ouverture d'amenée de matériau (12), les segments de cercle (11) concaves sont omis au moins sur une région partielle axiale.

8. Dispositif selon l'une quelconque des revendications 1 à 7, caractérisé en ce que le noyau (6) est omis dans la région de l'ouverture d'amenée de matériau (12) au moins sur une région axiale.

9. Dispositif selon l'une des revendications précédentes, caractérisé en ce que les éléments de traitement (9) sont des éléments de vis sans fin.

10. Dispositif selon l'une des revendications précédentes, caractérisé en ce qu'un troncon de dégagement gazeux est prévu avec des ouvertures (15) de dégagement gazeux débouchant dans la chambre annulaire (2).

11. Dispositif selon les revendications 2 et 10, caractérisé en ce que le troncon de dégagement gazeux est agencé côté sortie de matériau de la zone de tassement.

12. Dispositif selon la revendication 11, caractérisé en ce que le tronçon de dégagement gazeux est réalisé côté amenée de matériau vers le passage de matériau par le cercle (3) soit (a) depuis l'extérieur vers l'intérieur, soit (b) depuis l'intérieur vers l'extérieur, et en ce que les ouvertures (15) de dégagement gazeux débouchent dans la chambre annulaire (2) à travers la paroi périphérique (5) du boîtier dans le cas (a) et par l'intermédiaire du noyau (6) dans le cas (b).

13. Dispositif selon la revendication 12, caractérisé en ce que pour le passage de matériau, dans le cas (a) les segments de cercle (11) concaves sont omis dans le noyau (6) et dans le cas (b), les segments de cercle (10) concaves sont omis dans la paroi périphérique (5) du boîtier.

14. Dispositif selon la revendication 12 ou la revendication 13, caractérisé en ce que côté sortie de matériau, il est réalisé, depuis le tronçon de dégagement gazeux vers le passage de matériau, par le cercle (3) depuis l'extérieur vers l'intérieur et inversement.

15. Dispositif selon la revendication 14, caractérisé en ce que pour le passage de matériau, non seulement les segments de cercle (10) concaves sont omis sur la paroi périphérique (5) du boîtier, mais aussi les segments de cercle (11) concaves sont omis sur le noyau (6).

16. Dispositif selon la revendication 1, caractérisé en ce que les ouvertures de sortie de matériau sont formées par des canaux (16) qui s'étendent depuis la chambre annulaire (2) de chaque arbre (4, 4', 4'') à travers la paroi frontale (8) du boîtier (1) vers l'extérieur.

17. Dispositif selon l'une quelconque des revendications précédentes, caractérisé en ce que pour entraîner les arbres (4, 4', 4'') portant les éléments de traitement, il est prévu un engrenage avec un arbre moteur (30) et avec des arbres menés (31, 31') reliés solidaires en rotation avec les arbres (4, 4', 4'') portant les éléments de traitement, l'arbre moteur (30) et les arbres menés (31, 31') étant accouplés les uns aux autres par coopération de formes par des roues dentées (38, 38', 39, 39') agencées solidaires en rotation sur lesdits arbres.

18. Dispositif selon la revendication 17, caractérisé en ce que les roues dentées (38, 38' ; 39, 39') agencées sur l'arbre moteur (30) et sur les arbres menés (31, 31') sont additionnellement accouplées les unes aux autres par l'intermédiaire d'au moins un pignon intermédiaire (44, 44') et d'au moins une roue (46, 46') pourvue d'une denture intérieure (45, 45').

19. Dispositif selon la revendication 17, caractérisé en ce que deux roues dentées motrices (38, 38') décalées axialement l'une par rapport à l'autre sont agencées solidaires en rotation sur l'arbre moteur (30) et en ce que les roues dentées sur les arbres menés (31, 31') sont formées par des pignons (39, 39') agencés solidaires en rotation sur ceux-ci, les pignons (39, 39') d'arbres menés voisins étant agencés axialement en décalage les uns par rapport aux autres pour s'égrener dans l'une ou dans l'autre des deux roues dentées motrices (38, 38'), respectivement.

20. Dispositif selon les revendications 18 et 19, caractérisé en ce que les deux roues dentées motrices (38, 38') sont accouplées avec les pignons (39, 39') sur les arbres menés (31, 31') par l'intermédiaire d'au moins un pignon intermédiaire (44, 44') respectif et d'au moins une roue (46, 46') respective munie d'une denture intérieure (45, 45').

21. Dispositif selon l'une quelconque des revendications 5 à 7, caractérisé en ce que le nombre des pignons intermédiaires (44, 44') correspond au nombre de pignons (39, 39') sur les arbres menés (31, 31').

22. Dispositif selon la revendication 21, caractérisé en ce qu'un pignon intermédiaire (44, 44') est agencé diamétralement à l'opposé de chaque pignon (39, 39')sur un des arbres menés (31, 31').

23. Dispositif selon l'une quelconque des revendications 18 à 22, caractérisé en ce que les arbres menés (31, 31') et les pignons intermédiaires (44, 44') sont agencés avec le même espacement par rapport à l'angle au centre (α).

24. Dispositif selon la revendication 23, caractérisé en ce que les pignons (39, 39') et les pignons intermédiaires (44, 44'), voisins les uns des autres, présentent le même espacement par rapport à l'angle au centre que les pignons (39, 39') et les pignons intermédiaires (44, 44'), voisins les uns des autres, les uns par rapport aux autres.
